# EUROPÄISCHE PATENTSCHRIFT

(11) **EP 1 707 042 B1**
(45) Veröffentlichungstag und Bekanntmachung des Hinweises auf die Patenterteilung: **15.05.2013**
(21) Anmeldenummer: 06005132.3
(22) Anmeldetag: 14.03.2006
(51) Int. Cl.: E01C 19/20, A01C 17/00

(54) **Zweischeibenstreuer für Streugut, insbesondere Dünger, Salz oder dergleichen**
Two-discs-spreader for granular material, in particular fertilizer, salt or the like
Distributeur centrifuge à deux disques pour des matériaux granulaires, en particulier engrais, sel ou similaires

(30) Priorität: 02.04.2005 DE 102005015236
(43) Veröffentlichungstag der Anmeldung: 04.10.2006
(73) Patentinhaber: RAUCH Landmaschinenfabrik GmbH, 76547 Sinzheim (DE)
(72) Erfinder: Rauch, Norbert, 76547 Sinzheim (DE); Doll, Franz, 76547 Sinzheim (DE); Weisser, Thomas, 77815 Bühl (DE); Velten, Michael, 76547 Sinzheim (DE)
(74) Vertreter: Lasch, Hartmut

(56) Entgegenhaltungen:
- EP-A- 0 410 312
- EP-A- 0 542 112
- EP-A- 0 876 747
- EP-A- 1 247 437

## Beschreibung

Die Erfindung betrifft einen Zweischeibenstreuer für Streugut mit einem Vorratsbehälter, der zwei sich zu je einem Boden verjüngende Trichter aufweist, je einer jedem Boden zugeordneten Dosiereinrichtung mit Dosieröffnung und Dosierschieber zur Einstellung des gewünschten Massenstroms (Streumenge) und je einer darunter umlaufenden Verteilerscheibe mit Wurfflügeln, die entgegen der Fahrtrichtung des Streuers von innen nach außen umlaufen und sich nicht vollständig überlappende Streufächer erzeugen, so dass der Streufächer einer Verteilscheibe (4) nicht größer als bis zur halben Arbeitsbreite auf der anderen Seite reicht.

Zum gleichmäßigen Verteilen von landwirtschaftlichen und kommunalen Streugütern, z.B. Dünger, Salz oder dergleichen, haben sich Maschinen mit zwei Verteilerscheiben in der Praxis bewährt. Die Anforderungen an die Präzision der Dosierung und Verteilung des Streugutes steigen stetig an, wobei einerseits die Reduzierung des Dünger- bzw. Salzverbrauchs zur Reduzierung von Betriebsmittelkosten und zur Verringerung der Umweltbelastung, andererseits die Erhöhung der Wirkung des Streugutes im Vordergrund steht.

Die Grundfunktionen eines Scheibenstreuers kann man in "Dosieren" und "Verteilen" des Streugutes einteilen. Es ist bekannt, dass die Dosiereinrichtung neben ihrer Hauptaufgabe der präzisen Dosierung des Streugutes auch einen wesentlichen Einfluss auf die Qualität der Verteilung durch die Verteilerscheiben hat, insbesondere an der Schnittstelle zwischen beiden Funktionen.

So ist es bei einem Zweischeibenstreuer mit von innen nach außen umlaufenden Verteilerscheiben bekannt (DE 1 966 951 U) im Behälterboden mehrere Dosieröffnungen radial nebeneinander anzuordnen und ihnen getrennte Dosierschieber zuzuordnen, so dass das Streugut auf verschiedenen Stellen auf die Verteilerscheibe aufgegeben wird und zu unterschiedlichen Zeitpunkten von den Wurfflügeln am Scheibenrand abgeworfen wird. Damit sollen von jeder Verteilerscheibe vier nebeneinanderliegende Streufächer erzeugt werden, die sich zu einer gleichmäßigen Streugutverteilung geringfügig überlappen. Dies wird noch dadurch unterstützt, dass die Wurfschaufeln auf der Verteilerscheibe unter unterschiedlichen Winkeln gegenüber der Radialen angestellt sind. Bei diesem Stand der Technik wird keine Rücksicht auf die Beeinflussung des Streubildes durch die Streumenge (Massenstrom) genommen.

Eine ähnliche Tendenz wird bei einem anderen bekannten Zweischeibenstreuer (EP 0 545 894 B2) verfolgt, wobei jeder Verteilerscheibe allerdings nur zwei Dosiereinrichtungen zugeordnet sind, das Streugut also an zwei Stellen auf die Verteilerscheibe aufgegeben wird. Beide Dosiereinrichtungen sind getrennt voneinander am Boden des Vorratsbehälters verstellbar angebracht, so dass die Aufgabepunkte gemeinsam oder getrennt voneinander verstellt werden können. Damit soll insbesondere eine Korrektur des Streubildes und - durch eine computergesteuerte Fernbedienung - auch während des Ausbringvorgangs eine automatische Ein- und Verstellung der Auslaufquerschnitte sowie der Lage der Aufgabeflächen zur Streubildkorrektur unter Berücksichtigung der jeweiligen Nährstoffversorgung der zu bestreuenden Fläche möglich sein. Die Druckschrift lässt allerdings die konkreten Maßnahmen offen, mit denen das behauptete Ziel erreicht wird. Ferner schweigt sich die Druckschrift darüber aus, in welcher Weise die Verteilerscheiben bezüglich der Fahrtrichtung des Streuer umlaufen, was aber für die Art der erzeugten Streubilder von entscheidender Bedeutung ist. Laufen die Verteilerscheiben entgegen der Fahrtrichtung von innen nach außen um, wie dies bei dem eingangs genannten Zweischeibenstreuer der Fall ist, so überlappen sich die von den beiden Verteilerscheiben erzeugten Streufächer in der Mitte nicht vollständig, während bei umgekehrter Drehrichtung der Verteilerscheiben die Streufächer auf annähernd 180° aufgeweitet sind und sich somit auf der Arbeitsbreite im Wesentlichen vollständig überlappen.

Bei einem anderen bekannten Zweischeibenstreuer (EP 0 820 219 B1) mit entgegen der Fahrtrichtung von innen nach außen umlaufenden Verteilerscheiben sind wiederum zwei Dosiereinrichtungen mit je einer Dosieröffnung und einem Dosierschieber vorgesehen, die miteinander oder unabhängig voneinander um das Zentrum der Verteilerscheibe verstellt werden können, um das Streugut auf zwei Stellen aufzugeben und die Lage der Aufgabestellen beispielsweise in Abhängigkeit von der Streumenge und der Streugutsorte zu variieren. Dabei ist insbesondere vorgesehen, die Dosieröffnungen und die Dosierschieber derart einander zuzuordnen, dass bei Vergrößerung des Massenstroms sich der Aufgabepunkt nach außen zum Scheibenrand hin verlagert. Bei diesem bekannten Zweischeibenstreuer sind die Dosiereinrichtungen sehr bauaufwendig und aufgrund der Vielfachfunktionen auch störanfällig.

Es ist schließlich ein Zweischeibenstreuer (EP 0 784 917 B1) bekannt, bei dem die Verteilerscheiben umgekehrt, nämlich in Fahrtrichtung von innen nach außen umlaufen. Bei einer Ausführungsform sind jeder Verteilerscheibe drei Dosieböffnungen im Boden des Vorratsbehälters zugeordnet, die ringförmig ausgebildet sind und die von einem einzigen Dosierschieber geöffnet oder verschlossen werden. Der Dosierschieber weist eine Dosierkante in Form einer unstetigen Kurve auf, so dass in jeder Schieberstellung unterschiedliche Querschnitte der Dosieröffnungen freigelegt werden. In einer zweiten Ausführungsform ist nur eine einzige rechteckige Dosieröffnung vorgesehen, während der Dosierschieber eine Dosierkante nach Art einer Zahnleiste aufweist, wobei die Zahnhöhe von beiden Schmalseiten der rechteckigen Dosieröffnung zur Mitte hin abnimmt. Damit soll im Zentrum des Streufächers mehr Streugut abgelegt werden als an den Seiten und bei kleiner Streumenge ein trapezförmiges Streubild erreicht werden. Schließlich soll hierdurch eine Anpassung an verschiedene Streugutsorten möglich sein.

Bei gleichem Umlauf der Verteilerscheiben, nämlich in Fahrtrichtung des Streuers von innen nach außen, ist es ferne bekannt (EP-A-0 876 747), auf dem Boden der trichterförmigen Unterteile des Streugutbehälters zwei Dosieröffnungen nebeneinander zuzuordnen, so dass das Streugut bei kleinem Massenstrom unter einem relativ großen Aufgabewinkel von wenigstens 120° auf die Verteilerscheibe aufgegeben wird. Die Umlaufrichtung der Verteilerscheiben in Bezug auf die Fahrtrichtung des Streuers führt zwangsläufig, und auch gewollt dazu, dass sich die erzeugten Streufächer wenigstens vollständig überlappen, was zu dem großen Nachteil führt, dass beim Grenzstreuen die Verteilerscheibe auf der Feldseite das Streugut mit dem von ihr erzeugten Streufächer über die Feldgrenze hinauswirft. Es müssen deshalb gesonderte, aufwendige Grenzstreuschirme vorgesehen werden. Dies ist selbst bei kleinsten Streumengen und entsprechend kleiner Öffnungsfläche der Dosieröffnung der Fall.

Ein bisher nur unzureichend gelöstes Problem bei Zweischeibenstreuern ist die Veränderung der Verteilung des Streugutes bei Veränderung der Dosiermenge (Massenstrom). Der Abwurfwinkel am Scheibenrand, der auch mit Streuwinkel bezeichnet wird, also der Winkelbereich, über den das Streugut aus dem Wurfflügel austritt, verändert sich mit der Veränderung der Dosiermenge (Massenstrom). Dieser Effekt wird auch als "Mengeneffekt" bezeichnet.

Durch komplexe Vorgänge im Wurfflügel bei der Übergabe des Streugutes aus der Dosiereinrichtung in den Wurfflügel ergeben sich bei kleinen Massenströmen, z.B. wenigen Körnern im Wurfflügel, kleine Streuwinkel, bei großen Massenströmen hingegen große und zudem verlagerte Streuwinkel. Mit den zuvor beschriebenen bekannten Maßnahmen, z.B. mehrere Dosieröffnungen, Verlagerung des Aufgabepunktes bzw. des Flächenschwerpunktes beim Öffnen der Dosieröffnung, durch einstellbare Wurfflügel etc. ist versucht worden, die Veränderung der Verteilung bei Veränderung des Massenstroms zu kompensieren. Dabei hat man sich bisher im Wesentlichen darauf beschränkt, einen konstanten Massenstrom in Abhängigkeit von der Fahrgeschwindigkeit, der Streumenge und der Arbeitsbreite einzustellen und ebenso die Wurfflügel der Verteilerscheiben hierauf einzustellen. Für eine bestimmte Streumenge werden dadurch eine hinreichend gleichmäßige und genaue Streugutverteilung erreicht.

In der heutigen Landwirtschaft wird zunehmend eine teilflächenspezifische Dosierung gefordert, die eine ständige und einfache Veränderung des Massenstroms unter Beibehaltung einer gleichmäßigen Verteilung notwendig macht. So wird beispielsweise mittels Stickstoff-Sensoren der Stickstoffbedarf der Pflanzen erfasst und die Düngerausbringung entsprechend dem Bedarf der Pflanzen flächenspezifisch vorgenommen. Dabei sind Massenstromsprünge von bis zu 1:10 keine Seltenheit. Diese erheblichen Massenstromänderungen führen jedoch bei den bekannten Zweischeibenstreuern zu unerwünschten Änderungen in der Düngerverteilung.

Der Erfindung liegt die Aufgabe zugrunde, einerseits ein Dosiersystem zu schaffen, das bei einer Änderung des Massenstroms keine oder eine nur geringfügige Änderung der Verteilung des Streugutes bewirkt, andererseits bei Zweischeibenstreuern mit entgegen der Fahrtrichtung von innen nach außen drehenden Verteilerscheiben den Streufächer einer Verteilerscheibe nicht größer als bis zur halben Arbeitsbreite auf der anderen Seite werden zu lassen. Ferner sollen hohe Massenströme für hohe Fahrgeschwindigkeiten und große Arbeitsbreiten möglich sein.

Diese Aufgabe wird bei einem Zweischeibensteuer der eingangs genannten Aufbaue erfindungsgemäß dadurch gelöst, dass jedem Boden eine Dosieröffnung zugeordnet ist, deren Öffnungskante in Verbindung mit der Dosierkante des Dosierschiebers derart gestaltet ist, dass der Aufgabewinkel α des Streugutes auf die Verteilerscheibe bei kleinem Massenstrom mit einer Öffnungsfläche von ca. 2% der Dosieröffnung 70° ≤ α ≤ 90° beträgt und beim stufenweisen Öffnen des Dosierschiebers zu größeren Massenströmen bis zu einer Öffnungsfläche von ca. 90% der Dosieröffnung sich der relative Aufgabewinkel der letzten Teilfläche zwischen 85% und 90% der Öffnungsfläche gegenüber der ersten Teilfläche um mindestens 25° verkleinert.

Als relativer Aufgabewinkel im Sinne der Erfindung wird derjenige Winkel zwischen zwei Radialstrahlen der Verteilerscheibe verstanden, der durch die Schnittpunkte der Dosierkante des Dosierschiebers mit der Öffnungskante der Dosieröffnung zwischen aufeinander folgenden Öffnungsstufen geht. Durch den sehr großen Aufgabewinkel bei kleinem Massenstrom ist gewährleistet, dass auch bei einer kleinen Streumenge der Dünger über einen großen Streuwinkel abgeworfen und somit auf der Streubreite bzw. Arbeitsbreite gleichmäßig verteilt wird. Bei zunehmendem Massenstrom (größere Streumenge) sorgt die Form der Dosieröffnung und die mit ihr zusammenwirkende Dosierkante des Dosierschiebers dafür, dass die jeweils hinzukommenden Teilflächen einen abnehmenden relativen Aufgabewinkel aufweisen, die zusätzliche Düngermenge also auf jeweils kleineren Teilflächen aufgegeben wird.

Da die Erfindung mit einer einfachen Dosiereinrichtung mit Dosieröffnung und Dosierschieber auskommt, ergibt sich eine einfache Bauweise. Sie gestattet insbesondere auch eine problemlose Änderung der Einstellung des Dosierschiebers während der Fahrt und dadurch eine teilflächenspezifische Dosierung entsprechend den jüngsten Anforderungen in der Landwirtschaft.

In bevorzugter Ausführung ist vorgesehen, dass beim Öffnen des Dosierschiebers von 85% auf 90% der freien Dosierfläche (große Massenströme) der relative Aufgabewinkel 35° ≤ αₙ ≤ 50° beträgt.

In bevorzugter Ausführung werden bei kleinen Massenströmen zwischen der Dosierkante des Dosierschiebers und der Öffnungskante der Dosieröffnung wenigstens zwei Öffnungen gebildet, die in Drehrichtung der Verteilerscheibe im Wesentlichen hintereinander liegen. Bei sehr kleinen Massenströmen können auch drei Öffnungen gebildet werden.

Dadurch ist gewährleistet, dass das Streugut bei kleinen Massenströmen an verschiedenen Punkten der Verteilerscheibe aufgegeben und zu unterschiedlichen Zeitpunkten von den Wurfflügeln erfasst und nach außen beschleunigt wird und damit auch über einen weiten Streuwinkel von den Wurfflügeln abgegeben wird, ohne dass mehrere Dosierschieber mit entsprechendem Antrieb notwendig sind.

Bei größeren Massenströmen grenzt der Dosierschieber nur eine einzige Öffnungsfläche von der Dosieröffnung ab.

In Verbindung mit dem zuvor beschriebenen Merkmal ist gewährleistet, dass der Streufächer einer Verteilerscheibe nicht weiter als bis zur halben Arbeitsbreite auf die Seite der anderen Verteilerscheibe reicht, um unter anderem ein Grenzstreuen zu ermöglichen, da ansonsten die grenzferne Verteilerscheibe über die Grenze hinaus streuen würde. Auch wird der Streufächer bei großen Massenströmen nicht verlagert.

In vorteilhafter Weiterbildung der Erfindung ist vorgesehen, dass die Öffnungskante der Dosieröffnung an der Anlaufseite des Wurfflügels bis zu einem mittleren Massenstrom im Wesentlichen radial und zu größeren Massenströmen in Drehrichtung nach außen verläuft. Anschließend verläuft die Öffnungskante im Wesentlichen konzentrisch zur Drehachse der Verteilerscheibe und schließlich an der Auslaufseite des Wurfflügels in einer steilen Kurve nach innen in Richtung auf das Zentrum der Verteilerscheibe. Damit wird eine besonders flache Verteilungskurve im äußeren Bereich des Streufächers erreicht.

In dem dem Zentrum der Verteilerscheibe nahen Bereich weist die Öffnungskante der Dosieröffnung eine asymmetrische Wellenform auf. Dieser Bereich der Öffnungskante ist im Wesentlichen für kleine Dosiermengen verantwortlich. In Verbindung mit einem im Wesentlichen radial beweglichen Dosierschieber werden im Bereich der asymmetrischen Wellenform der Öffnungskante der Dosieröffnung die zuvor beschriebenen zwei oder drei Öffnungen für kleine bis kleinste Massenströme abgegrenzt.

Die Kontur der Dosieröffnung, die Bewegung des Dosierschiebers und dessen Kontur sind so aufeinander abgestimmt, dass der Flächenschwerpunkt der Dosierfläche von kleinen zu größeren Massenströmen entgegen der Drehrichtung der Verteilerscheibe von innen nach außen wandert.

Vorteilhafterweise beträgt die maximale Dosierfläche mindestens 70 cm² und weniger als 90 cm².

Dem Grundgedanken der Erfindung, nur eine einzige Dosieröffnung mit der oben beschriebenen Kontur vorzusehen, steht nicht entgegen, die Dosieröffnung durch schmale Materialstege zu unterbrechen, die gegenüberliegende Öffnungskanten der Dosieröffnung verbindet.

In weiterhin bevorzugter Ausführung weist die Dosierkante des Dosierschiebers wenigstens eine Nase auf, die mit dem tiefsten Wellental an der asymmetrischen Wellenform der Öffnungskante der Dosieröffnung zusammenwirkt. Diese Nase trägt in Verbindung mit der weiteren Kontur der Dosierkante dazu bei, bei kleinen Massenströmen zwei oder drei Öffnungen von der Dosieröffnung abzugrenzen.

Der Dosierschieber ist vorzugsweise schwenkbar gelagert und führt beim Öffnen mit Bezug auf die Verteilerscheibe eine Bewegung von innen nach außen aus.

Gemäß einem weiteren Ausführungsbeispiel ist vorgesehen, dass die Dosiereinrichtung aus einer Platte mit der Dosieröffnung und dem Dosierschieber besteht und unter dem ebenen, horizontalen Boden des Vorratsbehälters mit einer großen Auslauföffnung angeordnet und mit Bezug auf die Verteilerscheibe zur Einstellung auf verschiedene Streugüter drehbar und festsetzbar ist.

Der horizontale Boden des Vorratsbehälters weist eine große Auslauföffnung auf. Unterhalb derselben ist die Dosiereinrichtung am Boden des Vorratsbehälters drehbar gelagert und festsetzbar. Auf diese Weise lässt sich die Dosiereinrichtung innerhalb der Auslauföffnung mit Bezug auf das Zentrum der Verteilerscheibe verdrehen, um bei ansonsten gleicher Funktion der Dosiereinrichtung den Aufgabepunkt zu verlagern.

Bei Zweischeibenstreuern ist oberhalb jedes Trichterbodens im Vorratsbehälter ein Rührwerk mit im Wesentlichen radialen Rührwerksfingern angeordnet. Das Rührwerk weist in der Regel einen von dem Antrieb der Verteilerscheiben abgeleiteten Antrieb auf. Bei der erfindungsgemäßen Ausbildung ist vorgesehen, dass die Rührwerksfinger die Dosieröffnung im Wesentlichen nur im Bereich der asymmetrischen Wellenform der Öffnungskante überstreichen, also im Bereich der Einstellung kleiner Massenströme, bei denen eine erhöhte Verstopfungsgefahr durch Aufstauen des Streugutes besteht.

Schließlich ist vorteilhafterweise vorgesehen, dass mit Bezug auf die Verbindungslinie der Rührwerksachsen mindestens 60% der Fläche der Auslauföffnung in Fahrtrichtung des Zweischeibenstreuers gesehen hinter dieser Verbindungslinie liegen.

Nachstehend ist die Erfindung anhand eines in der Zeichnung wiedergegebenen Ausführungsbeispiels beschrieben. In der Zeichnung zeigen:
- Fig. 1: eine schematische perspektivische Ansicht eines Zweischeibenstreuers mit aufgeschnittenem Behälter;
- Fig. 2: eine Teilansicht von oben in den Behälter und auf die beiden Böden des Behälters und
- Fig. 3-13: schematische Draufsichten auf die Dosieröffnung und den Dosierschieber in verschiedenen Betriebsstellungen des letzteren.

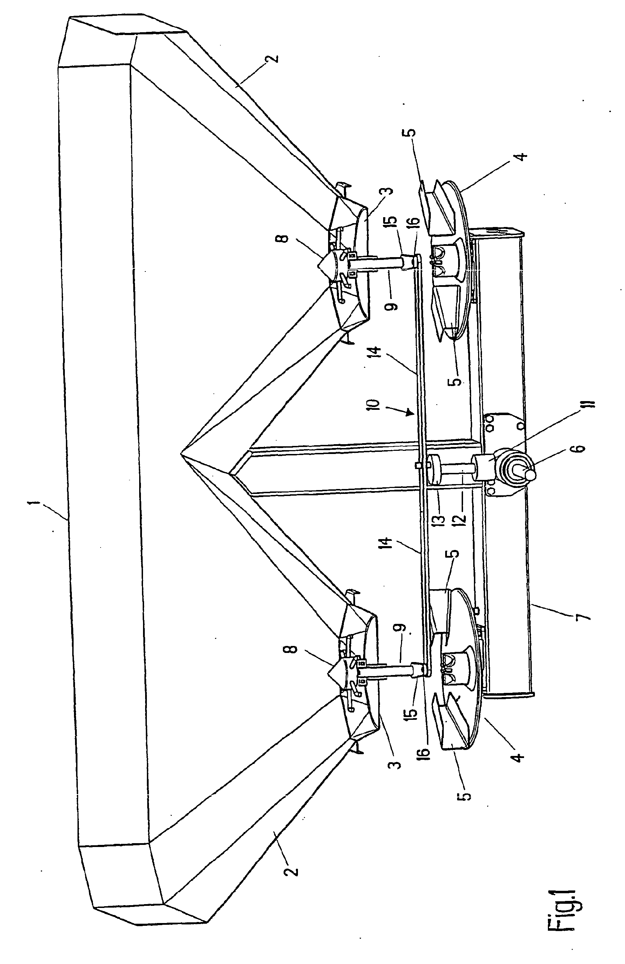

Fig.1 zeigt schematisch den Aufbau eines Ausführungsbeispiels eines Zweischeibenstreuers. Er weist einen großvolumigen Behälter 1 auf, der zwei sich trichterförmig verjüngende Unterteile 2 aufweist, wobei die Trichterwände in einem Boden 3 zusammenlaufen. Unterhalb jedes Bodens ist eine Verteilerscheibe angeordnet, die beim gezeigten Ausführungsbeispiel mit zwei Wurfschaufeln 5 besetzt ist. Die Verteilerscheiben 4 werden von der Zapfwelle des Traktors über eine Gelenkwelle angetrieben, die an die Eingangswelle 6 eines Getriebes in einem sich quer erstreckenden Gehäuse 7 angeschlossen ist. Das Getriebe besteht im Wesentlichen aus einem eingangsseitig angeordneten Winkelgetriebe und einer Querwelle, die wiederum über endständige Winkelgetriebe die Antriebswellen der Verteilerscheiben 4 in Drehung versetzt.

In jedem trichterförmigen Unterteil 2 befindet sich unmittelbar oberhalb des Bodens 3 ein Rührwerk 8, dessen Welle 9 jeweils im Boden 3 gelagert ist.

Zum Antrieb der Rührwerke 8 ist ein Antriebsstrang 10 vorgesehen, der etwa von der Mitte des Getriebes 7 ausgeht und ausschließlich im Raum unterhalb des Behälters 1 bzw. der Böden 3 und im Bereich der Verteilerscheiben 4 oberhalb derselben verläuft.

Der Antriebsstrang 10 der Rührwerke 8 ist von der Eingangswelle 6 des Getriebes abgeleitet. Zu diesem Zweck wird das Drehmoment der Eingangswelle 6 über ein schematisch angedeutetes Winkelgetriebe 11 auf eine senkrechte Welle 12 übertragen, die an ihrem oberen Ende eine Scheibe 13 mit einem exzentrischen Zapfen trägt, der seinerseits Schub- bzw. Zugstangen 14 in eine lineare Hin- und Herbewegung versetzt. Die Schub- bzw. Zugstangen 14 übertragen ihre Bewegung auf endständig angeordnete Verbindungshebel 15. Die Verbindungshebel 15 sind bei 16 an den Schubstangen 14 angelenkt. Durch die Schwenkbewegung der Verbindungshebel 15 wird eine oszillierende Drehbewegung auf die Antriebswellen 9 der Rührwerke 8 übertragen. Die oszillierende Drehbewegung kann durch Anordnung eines Schaltfreilaufs, z.B. eines Klemmkörperfreilaufs, auf der Antriebswelle 9 des Rührwerks 8 in eine Drehschrittbewegung des Rührwerks umgeformt werden. Durch eine geeignete Übersetzung in der Antriebsverbindung 11, 12 und 13 und/oder durch entsprechende Hebelverhältnisse des Anlenkpunktes 16 zu dem Angriffspunkt der Verbindungshebel 15 an der Rührwerkswelle 9 lässt sich die Drehschrittgeschwindigkeit auf ein gewünscht niedriges Maß reduzieren und durch wenigstens zwei vorgegebene Einstellungen oder durch Austausch der Verbindungshebel 15 an die normierten Zapfwellendrehzahlen (540min⁻¹ bzw. 1000min⁻¹) anpassen.

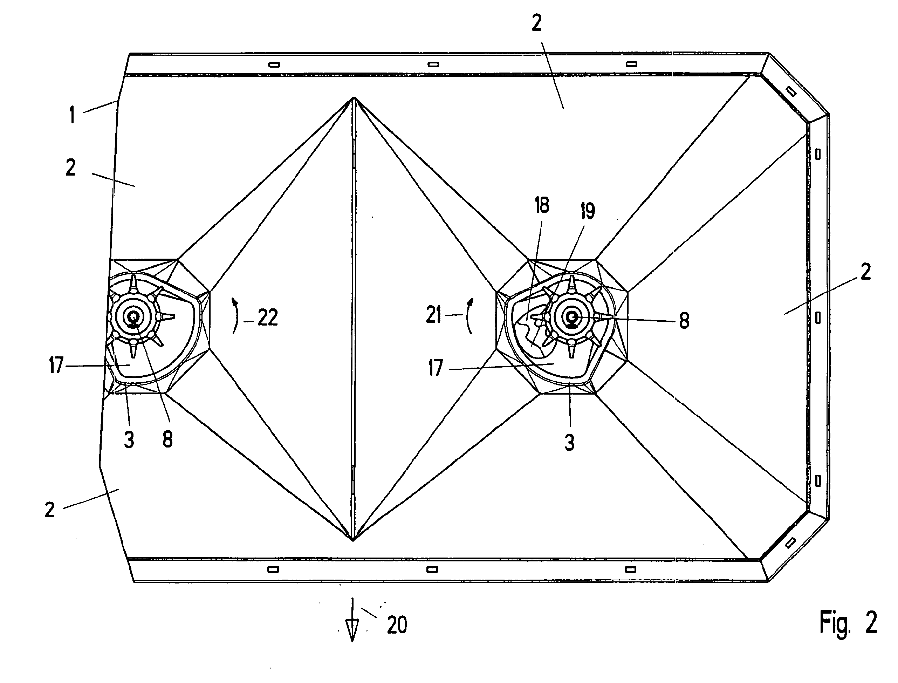

In Fig.1 kommt nur undeutlich zum Ausdruck, dass die Verbindungshebel 15 in Fahrtrichtung (20 in Fig. 2) von vorne in den Raum zwischen dem Boden 3 und der Wurfscheibe 4 eingreifen. Die Anordnung ist so getroffen, dass der Raum unterhalb der im Boden angeordneten, in Fig.2 gezeigten großflächigen Auslauföffnung 17 einerseits und der Verteilerscheibe andererseits frei bleibt, so dass der Dünger behinderungsfrei auf die Verteilerscheibe 4 gelangt. Wenigstens 60% der Fläche der Auslauföffnung 17 liegen in Fahrtrichtung 20 gesehen (Fig. 2) hinter der strichpunktiert wiedergegebenen Verbindungslinie der Achsen der Rührwerke 8. Im Bereich der Auslauföffnung 17 ist die Dosiereinrichtung, bestehend aus der Dosieröffnung 18, dem Dosierschieber 19 und einer nicht gezeigten manuellen, hydraulischen oder elektrischen Antriebseinheit (nicht gezeigt) verstellbar angeordnet. Auf diese Weise kann der Aufgabepunkt des Streugutes auf der Verteilerscheibe eingestellt werden, um beispielsweise für verschiedene Streugutsorten eine gleichgute Verteilung zu erhalten.

In Fig. 2 ist die Fahrtrichtung des Zweischeibenstreuers mit dem Richtungspfeil 20 angedeutet. Die unterhalb der Auslauföffnung 17 (Fig. 2) in Richtung der Pfeile 21, 22 umlaufenden Verteilerscheiben 4 mit den Wurfschaufeln 5 (Fig. 1) werfen mit den Enden ihrer Wurfschaufeln das Streugut in je einem Streufächer ab, die sich beide überlappen und ein flach dreieckförmiges Streubild ergeben. Beim Anschlussfahren entsteht hieraus eine lineare Verteilung. Die eine Verteilerscheibe wirft das Streugut bis etwa auf die halbe Arbeitsbreite auf die andere Seite, so dass auch ein Grenzstreuen möglich ist. Es wird ausdrücklich angemerkt, dass die nachfolgend beschriebene Ausführung der Erfindung auch bei jeder anderen Bauart eines Zweischeibenstreuers mit gleichen Vorteilen einsetzbar ist.

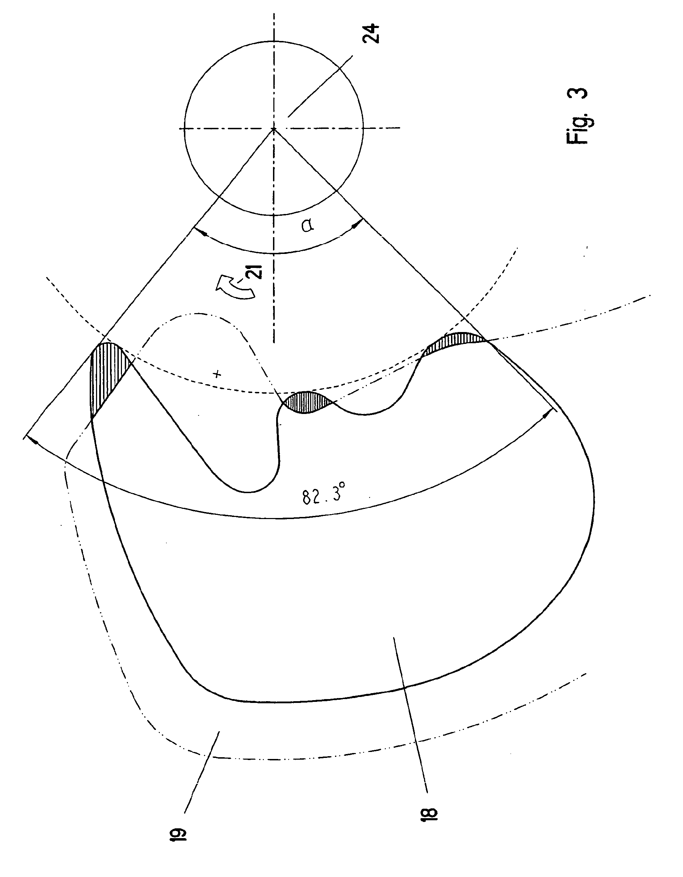

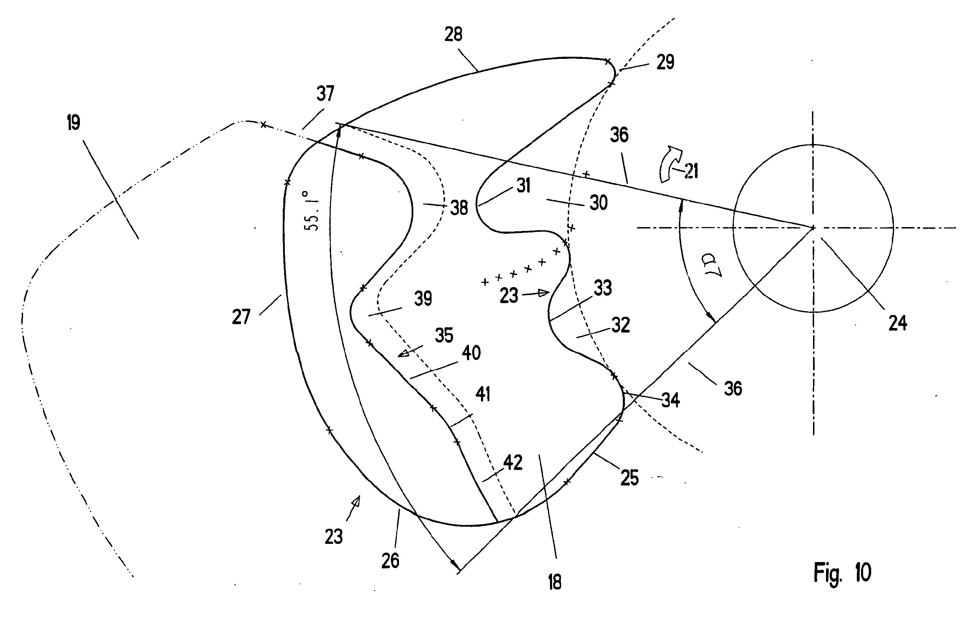

In den Fig. 3 bis 13 ist die Dosiereinrichtung in mehreren Betriebsstellungen wiedergegeben. Zur besseren Übersichtlichkeit werden die Charakteristika der Dosieröffnung 18 und des Dosierschiebers 19 zunächst mit Bezug auf Fig. 10 beschrieben. Die mit durchgezogener Linie wiedergegebene Dosieröffnung 18, die beispielsweise in einer nicht gezeigten, unterhalb des Bodens verstellbar angebrachten Platte angeordnet ist, weist eine Öffnungskante 23 auf, deren Kontur keiner mathematischen Regelmäßigkeit folgt. Mit Bezug auf die Drehachse 24 der Verteilerscheibe und deren Drehrichtung 21 (rechte Verteilerscheibe in Fig. 2) verläuft die Öffnungskante 23 an der Anlaufseite des Wurfflügels im Abschnitt 25 (durch Kreuze angedeutet) etwa auf einem Radialstrahl der Verteilerscheibe. Im anschließenden Abschnitt 26 verläuft die Öffnungskante 23 in einer demgegenüber steilen Kurve in Drehrichtung der Verteilerscheiben nach außen, um schließlich in einen annähernd konzentrischen Abschnitt 27 überzugehen. In einem weiteren Abschnitt 28 verläuft die Öffnungskante 23 in einer steilen Kurve nach innen. In dem der Achse 24 der Verteilerscheibe zugekehrten Bereich geht die Öffnungskante 23 von dem Abschnitt 28 über einen engen, bogenförmigen Abschnitt 29 in eine asymmetrische Wellenform über, die aus einem ein tiefes Wellental 30 bildenden Abschnitt 31 und einem ein flacheres und weiteres Wellental 32 bildenden Abschnitt 33 besteht. Der Abschnitt 33 geht schließlich über einen nach außen gekrümmten engen, bogenförmigen Abschnitt 34 wieder in den im Wesentlichen radialen Abschnitt 25 der Öffnungskante 23 über.

Der unter der Dosieröffnung schwenkbar gelagerte Dosierschieber 19 mit einem Schwenklager außerhalb der Dosieröffnung weist eine von der Geraden abweichende Dosierkante 35 auf. Die Dosierkante 35 weist zunächst einen etwa linearen, von außen nach innen verlaufenden Abschnitt 37 auf, der in einen nasenförmigen Abschnitt 38 mit einem großen Krümmungsradius übergeht. Daran schließt sich ein Abschnitt 39 in Form einer muldenartigen Vertiefung an, die wiederum in einen flachen etwa linearen Abschnitt 40 übergeht, der über eine flache Kurve 41 in einen weiteren etwa linearen Abschnitt 42 übergeht.

Der nasenförmige Abschnitt 38 und der Abschnitt 39 der Dosierkante 35 des Dosierschiebers 19 wirken im Dosierbetrieb im Wesentlichen mit dem das ausgeprägte Wellental 30 bildenden Abschnitt 31 der Öffnungskante 23 der Dosieröffnung zusammen, während die beiden linearen Abschnitte 40, 42 einschließlich des kurzen gekrümmten Abschnitts 41 der Dosierkante 35 mit dem Rest der wellenförmigen Kontur der Öffnungskante 23 der Dosieröffnung 18 zusammenwirken.

In Fig. 10, anhand der vorstehend die Kontur der Öffnungskante 23 und der Dosierkante 35 beschrieben worden ist, wird zwischen diesen beiden eine Öffnungsfläche für einen mittleren Massenstrom begrenzt. Der bei Durchlauf eines Wurfflügels 5 unter der Dosieröffnung 18 in Drehrichtung variierende Dosierspalt sorgt bei Beschleunigung des Streugutes im Wurfflügel nach außen zum Wurfflügelende hin zu einer leicht variierenden und vor allem zum Ende der Durchlaufbewegung langsam abnehmenden Streugutbeladung im Wurfflügel. Hierfür ist insbesondere der in einer steil nach innen verlaufenden Kurve gekrümmte Abschnitt 28 und der gegenüberliegende lineare Bereich des Abschnitts 31 mit dem bogenförmigen Übergangsabschnitt 29 verantwortlich. Für den Streufächer bedeutet dies, dass er in seinem äußeren in Fahrtrichtung nach vorne gezogenen Bereich eine überproportional stark abnehmende Streudichte aufweist.

Nachfolgend werden die Fig. 3 bis 13 entsprechend ihrer Ordnungszahl beschrieben. Die einzelnen Abschnitte der Öffnungskanten 23 der Dosieröffnung 18 und der Dosierkante 35 des Dosierschiebers (s. Fig. 10) werden in diesem Zusammenhang aus Gründen der Übersichtlichkeit nur noch im Einzelfall zitiert.

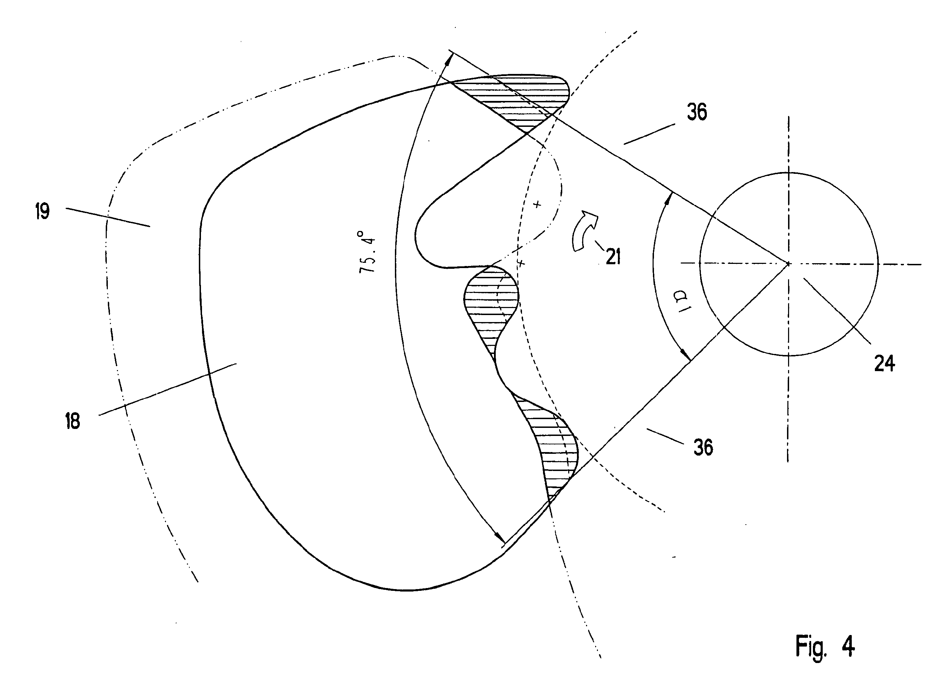

Fig. 3 zeigt eine Dosierstellung bei der der Aufgabewinkel α des Streugutes auf der Verteilerscheibe 4 etwa 82° beträgt. Die freie Öffnungsfläche, die den Massenstrom bestimmt, beträgt etwa 2% der Gesamtfläche der Dosieröffnung 18. Sie ist in Fig. 3 mit horizontaler Schraffur hervorgehoben. Aus Fig. 3 ist erkennbar, dass die freie Dosierfläche aufgrund der Kontur der Öffnungskante 23 und der Dosierkante 35 von drei diskreten Öffnungen bestimmt wird, die in Drehrichtung der Verteilerscheibe 4 und der Durchlaufrichtung des Wurfflügels 5 hintereinander liegen, so dass der insgesamt sehr kleine Massenstrom in drei aufeinander folgenden Portionen in den Wurfflügel übergeben wird, wobei die erste Portion bereits nach außen beschleunigt wird, wenn die zweite aufgegeben wird und diese wiederum nach außen beschleunigt wird, wenn die dritte Portion aufgegeben wird. Ähnlich verhält es sich bei der Einstellung des Dosierschiebers gemäß Fig. 4 mit der schraffiert wiedergegebenen Öffnungsfläche. Auch hier werden zwischen Dosierkante und Öffnungskante drei hintereinanderliegende Öffnungen gebildet, die bei sehr kleinen Massenströmen für eine gleichmäßige Verteilung des Streugutes entsprechend dem Verlauf der Streubilder sorgen. Der relative Aufgabewinkel α₁ gegenüber der ersten Stellung des Dosierschiebers 19 gemäß Fig. 3 der durch die Radialstrahlen 36, die durch die Schnittpunkte der Dosierkante 35 mit der Öffnungskante 23 der Dosieröffnung 18 in dieser vorangehenden Dosierstufe verlaufen, verkleinert sich gegenüber dem Aufgabewinkel α auf etwa 75°.

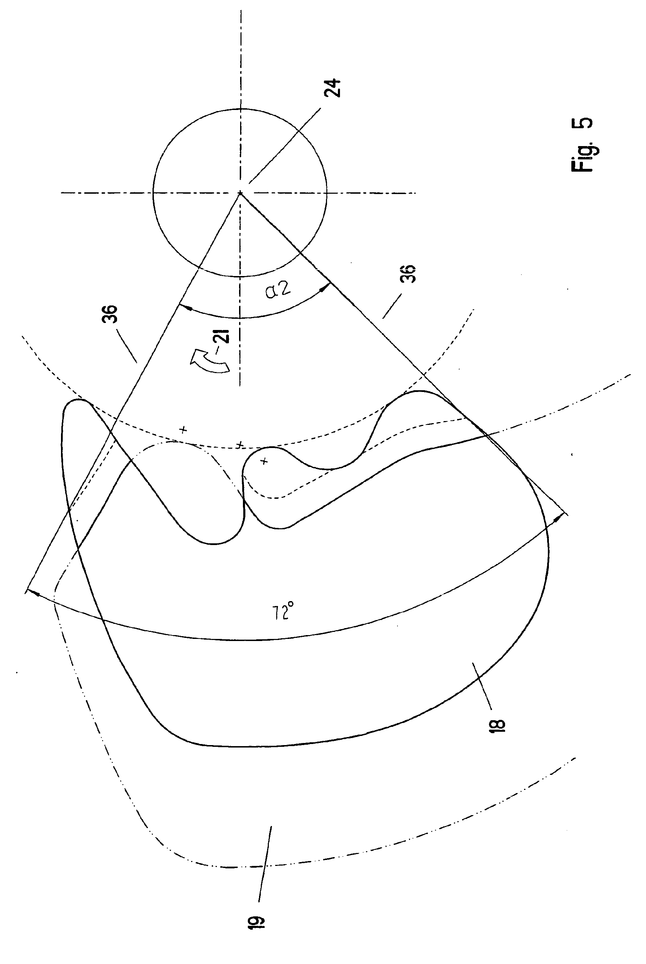

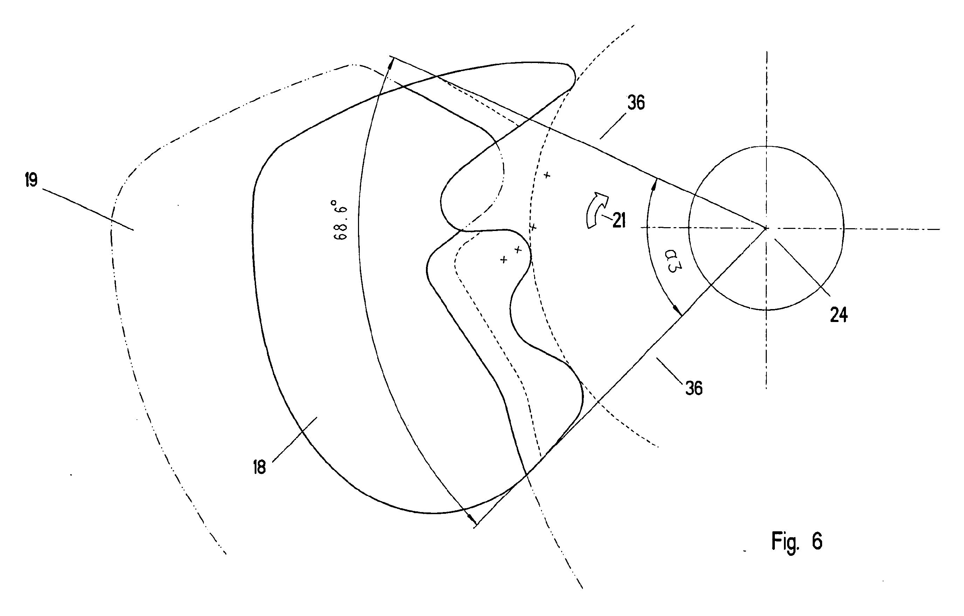

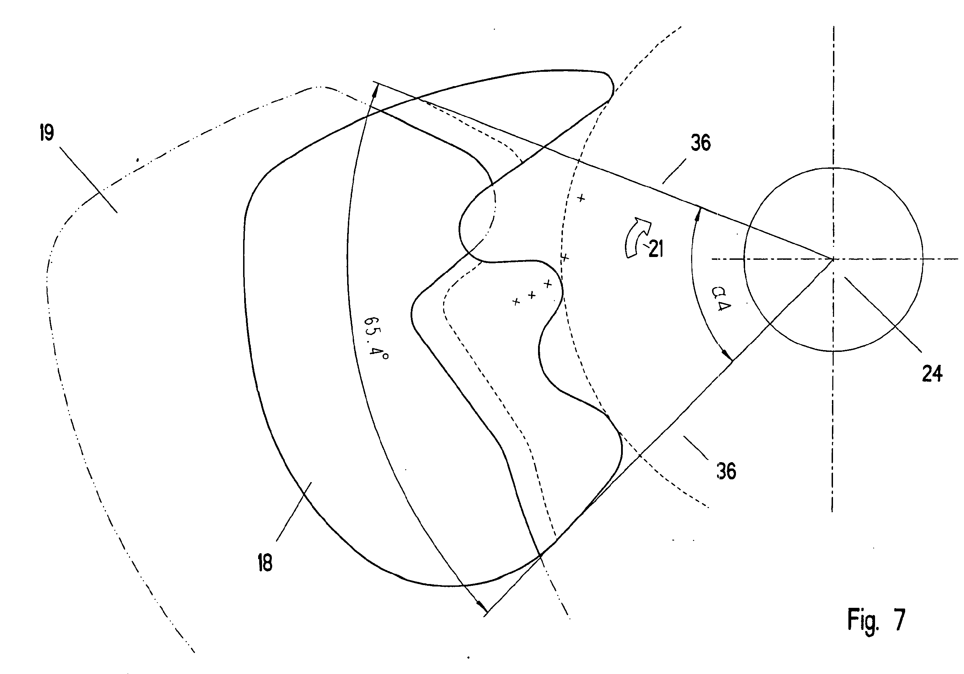

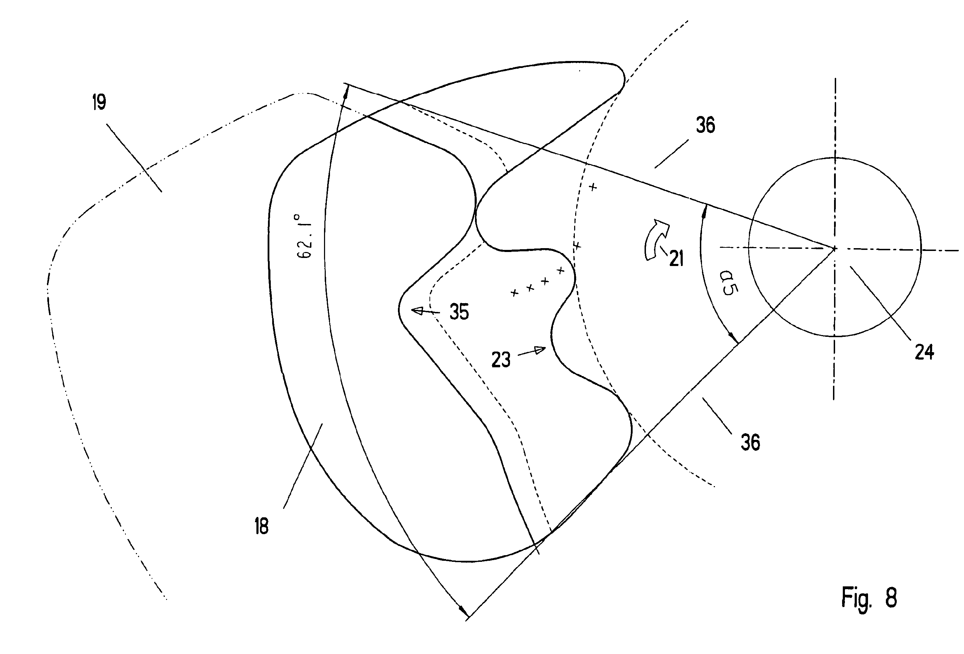

Bei zunehmenden aber immer noch kleinen Massenströmen (Fig. 5 und 6) verkleinert sich der relative Aufgabewinkel α₂ von ca. 72° auf α₃ von ca. 68,5°. Zwischen Dosierkante 35 und Öffnungskante werden noch zwei Öffnungen, die in Drehrichtung hintereinander liegen, gebildet. Dies gilt auch noch für einen Übergangsbereich zu einem mittleren Massenstrom (Fig. 7 und 8) mit einer Abnahme des relativen Aufgabewinkels über α₄ von ca. 65° auf α₅ von ca. 62°. Die gesamte Öffnungsfläche zwischen Dosierkante 35 und Öffnungskante 23, vergrößert sich von der Dosierstellung gemäß Fig. 3 bis zu der gemäß Fig. 8 stufenweise von 2% über 6,3%, 12,6% etc. bis auf 35,7% der gesamten Öffnungsfläche.

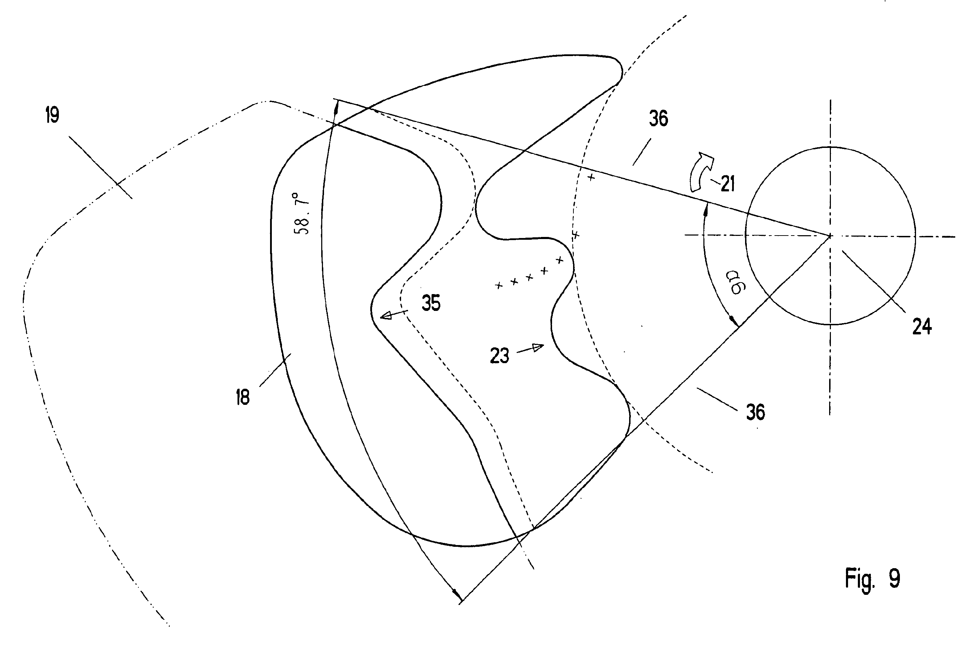

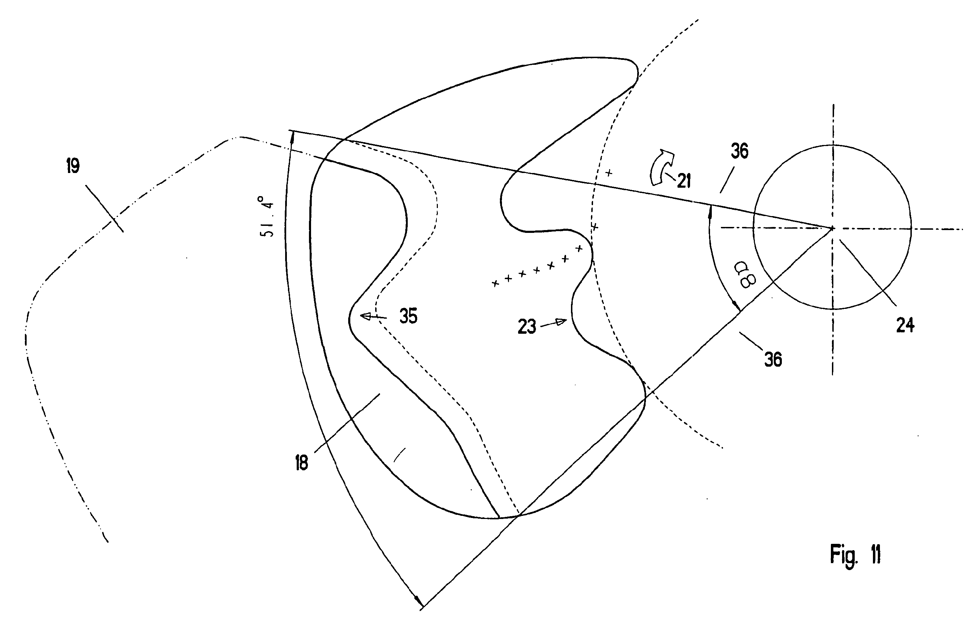

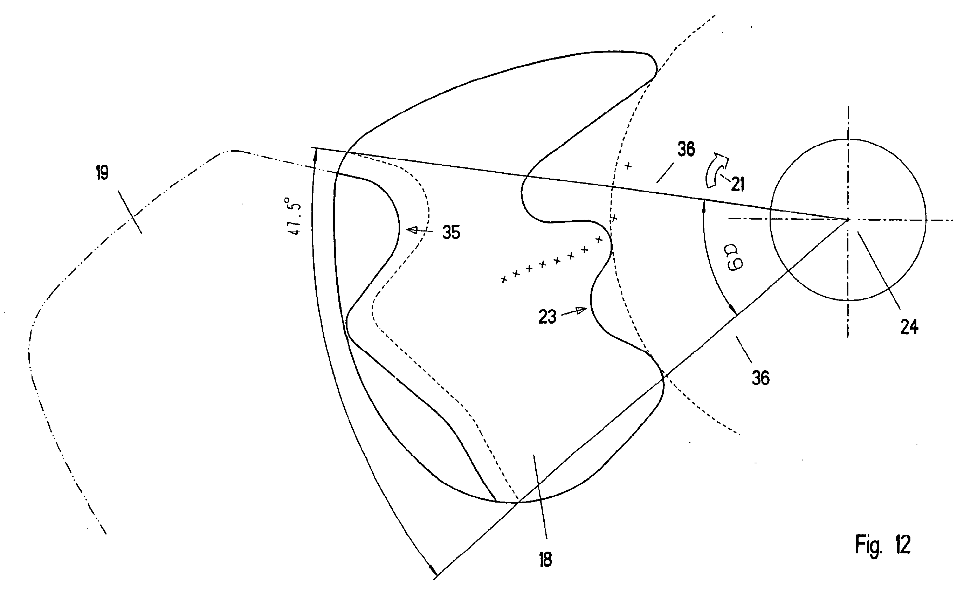

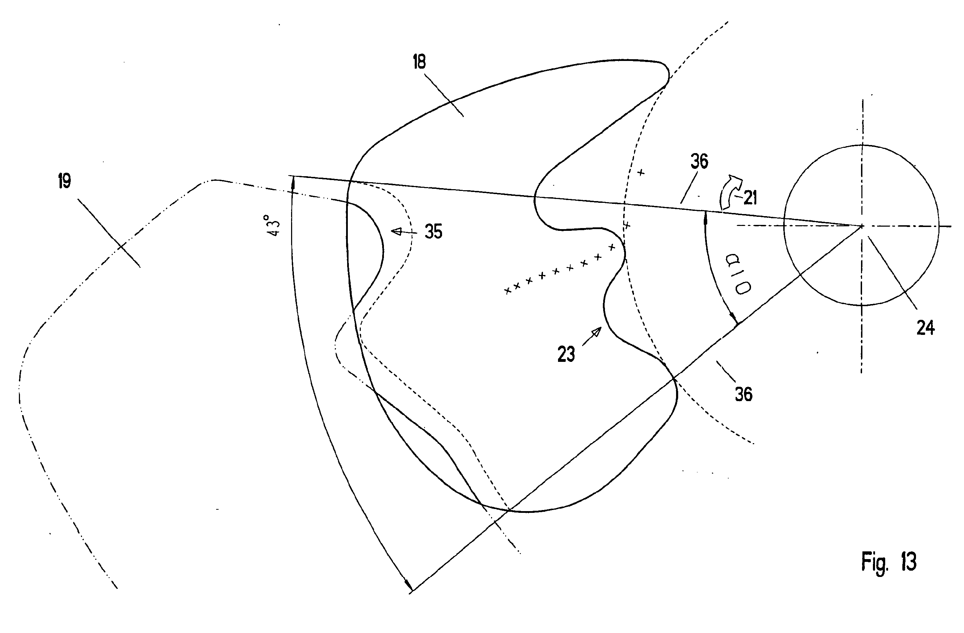

Ab einer etwa mittleren Dosiermenge (Fig. 9) findet zwischen dem Dosierschieber 19 und dem wellenförmigen inneren Abschnitt der Dosieröffnung 18 keine Überlappung mehr statt, der relative Aufgabewinkel ändert sich von 58,7° (Fig. 9) auf ca. 55° (Fig. 10). Bei weiterer Öffnung des Dosierschiebers 19 und Vergrößerung der Dosiermenge verkleinert sich der relative Aufgabewinkel von 51° in Fig. 11 über 47,5° in Fig. 12 auf 43° in Fig. 13. Der freie Dosierquerschnitt vergrößert sich von ca. 2 cm² in Fig. 3 stufenweise auf ca. 77 cm² in Fig. 13.

Der Aufgabepunkt des Streugutes auf die Verteilerscheibe 4, der dem flächenspezifischen Massenschwerpunkt der aufgegebenen Streugutmenge entspricht, wandert bei zunehmender Menge entgegen der Drehrichtung 21, 22 der Verteilerscheibe 4 und im übrigen nach außen. Der Aufgabepunkt (Massenschwerpunkt) ist in Fig. 3 bis 13 für die verschiedenen Stellungen des Dosierschiebers 19 mit Kreuzen angedeutet. Die von ihnen gebildete Kurve verläuft zunächst flach entgegen der Drehrichtung und anschließend steil nach außen.

## Patentansprüche

1. Zweischeibenstreuer für Streugut mit einem Vorratsbehälter (1), der zwei sich zu je einem Boden (3) verjüngende Trichter aufweist, je einer jedem Boden zugeordneten Dosiereinrichtung mit Dosieröffnung (18) und Dosierschieber (19) zur Einstellung des gewünschten Massenstroms (Streumenge) und je einer darunter umlaufenden Verteilerscheibe (4) mit Wurfflügeln (5), die entgegen der Fahrtrichtung (20) des Streuers von innen nach außen umlaufen (21, 22) und sich nicht vollständig überlappende Streufächer erzeugen, so dass der Streufächer einer Verteilerscheibe (4) nicht größer als bis zur halben Arbeitsbreite auf der anderen Seite reicht, wobei jedem Boden (3) eine Dosieröffnung (18) zugeordnet ist, deren Öffnungskante (23) in Verbindung mit der Dosierkante (35) des Dosierschiebers (19) derart gestaltet ist, dass der Aufgabewinkel α des Streugutes auf die Verteilerscheibe (4) bei kleinem Massenstrom mit einer Öffnungsfläche bis ca. 2% der Dosieröffnung (18) 70° ≤ α ≤ 90° beträgt und beim stufenweisen Öffnen des Dosierschiebers (19) zu größeren Massenströmen bis zu einer Öffnungsfläche von ca. 90% der Dosieröffnung (18) sich der relative Aufgabewinkel αₙ der letzten Teilfläche zwischen 85% und 90% der Öffnungsfläche gegenüber der ersten Teilfläche um mindestens 25° verkleinert.

2. Zweischeibenstreuer nach Anspruch 1, **dadurch gekennzeichnet, dass** beim Öffnen des Dosierschiebers (19) von 85% auf 90% der freien Dosierfläche (große Massenströme) der relative Aufgabewinkel 35° ≤ αₙ ≤ 50° beträgt.

3. Zweischeibenstreuer nach Anspruch 1 oder 2, **dadurch gekennzeichnet, dass** bei kleinen Massenströmen zwischen der Dosierkante (35) des Dosierschiebers (19) und der Öffnungskante (23) der Dosieröffnung (18) wenigstens zwei Öffnungen gebildet werden, die in Drehrichtung der Verteilerscheibe (4) im Wesentlichen hintereinander liegen (Fig. 3 bis 8).

4. Zweischeibenstreuer nach Anspruch 3, **dadurch gekennzeichnet, dass** bei sehr kleinen Massenströmen drei Öffnungen gebildet werden (Fig. 3 und 4).

5. Zweischeibenstreuer nach einem der Ansprüche 1 bis 4, **dadurch gekennzeichnet, dass** bei größeren Massenströmen der Dosierschieber (19) nur eine einzige Öffnungsfläche von der Dosieröffnung (18) abgrenzt.

6. Zweischeibenstreuer nach einem der Ansprüche 1 bis 5, **dadurch gekennzeichnet, dass** die Öffnungskante der Dosieröffnung (18) an der Anlaufseite des Wurfflügels (5) bis zu einem mittleren Massenstrom im Wesentlichen radial (25) und zu größeren Massenströmen in Drehrichtung nach außen (23) verläuft.

7. Zweischeibenstreuer nach Anspruch 6, **dadurch gekennzeichnet, dass** die Öffnungskante anschließend im Wesentlichen konzentrisch (27) zur Drehachse der Verteilerscheibe (4) und schließlich an der Auslaufseite des Wurfflügels (5) in einer steilen Kurve (28) nach innen verläuft.

8. Zweischeibenstreuer nach einem der Ansprüche 1 bis 7, **dadurch gekennzeichnet, dass** die Öffnungskante (23) der Dosieröffnung (18) in dem dem Zentrum (24) der Verteilerscheibe (4) nahen Bereich eine asymmetrische Wellenform (30, 32) aufweist.

9. Zweischeibenstreuer nach einem der Ansprüche 1 bis 7, **dadurch gekennzeichnet, dass** der Flächenschwerpunkt der Dosierfläche von kleinen zu größeren Massenströmen entgegen der Drehrichtung (21, 22) der Verteilerscheibe (4) von innen nach außen wandert (Fig. 13).

10. Zweischeibenstreuer nach einem der Ansprüche 1 bis 9, **dadurch gekennzeichnet, dass** die maximale Dosierfläche mindestens 70 cm² beträgt.

11. Zweischeibenstreuer nach einem der Ansprüche 1 bis 10, **dadurch gekennzeichnet, dass** die Dosierkante (35) des Dosierschiebers (19) wenigstens eine Nase (38) aufweist.

12. Zweischeibenstreuer nach einem der Ansprüche 1 bis 11, **dadurch gekennzeichnet, dass** die Nase (38) an der Dosierkante (35) des Dosierschiebers (19) mit dem tiefsten Wellental (30) der asymmetrischen Wellenform der Öffnungskante (23) der Dosieröffnung (18) zusammenwirkt.

13. Zweischeibenstreuer nach einem der Ansprüche 1 bis 12, **dadurch gekennzeichnet, dass** der Dosierschieber (19) schwenkbar gelagert ist.

14. Zweischeibenstreuer nach einem der Ansprüche 1 bis 13, **dadurch gekennzeichnet, dass** die Dosiereinrichtung aus einer Platte mit der Dosieröffnung (18) und dem Dosierschieber (19) besteht und unter dem ebenen, horizontalen Boden (3) des Vorratsbehälters (9) mit einer großen Auslauföffnung (17) angeordnet und mit Bezug auf die Verteilerscheibe (4) zur Einstellung auf verschiedene Streugüter drehbar und festsetzbar ist.

15. Zweischeibenstreuer nach einem der Ansprüche 1 bis 14 mit je einem oberhalb des Bodens (3) im Vorratsbehälter (9) umlaufenden Rührwerk (8) mit im Wesentlichen radialen Rührwerksfingern, **dadurch gekennzeichnet, dass** die Rührwerksfinger die Dosieröffnung (18) im Wesentlichen nur im Bereich der asymmetrischen Wellenform (30, 32) der Öffnungskante (23) überstreichen.

16. Zweischeibenstreuer nach einem der Ansprüche 1 bis 15, **dadurch gekennzeichnet, dass** mit Bezug auf die Verbindungslinie der Rührwerksachsen mindestens 60% der Fläche der Auslauföffnung (17) in Fahrtrichtung (20) des Zweischeibenstreuers gesehen hinter dieser Verbindunglinie liegen.

## Claims

1. Two-disc spreader for granular material, with a storage container (1) which has two funnels tapering to one base (3) each, one metering device assigned to each base and having a metering opening (18) and a metering slide (19) for setting the desired mass flow (spreading rate) and a distributor disc (4) revolving under each metering device and having throwing blades (5) which revolve from the inside outwards (21, 22) counter to the direction of travel (20) of the spreader and produce spreading fans which do not completely overlap, and therefore the spreading fan of one distributor disc (4) does not reach further than half the working width on the other side, wherein each base (3) is assigned a metering opening (18), the opening edge (23) of which is configured in conjunction with the metering edge (35) of the metering slide (19) in such a manner that, at a small mass flow with an opening area of up to approx. 2% of the metering opening (18), the feeding angle α of the granular material to the distributor disc (4) is 70° ≤ α ≤ 90° and, on stepwise opening of the metering slide (19) to give larger mass flows up to an opening area of approx. 90% of the metering opening (18), the relative feeding angle αₙ of the final partial area of between 85% and 90% of the opening area is reduced by at least 25° in relation to the first partial area.

2. Two-disc spreader according to Claim 1, **characterized in that**, on opening of the metering slide (19) from 85% to 90% of the free metering area (large mass flows), the relative feeding angle is 35° ≤ αₙ ≤ 50°

3. Two-disc spreader according to Claim 1 or 2, **characterized in that**, at small mass flows, at least two openings are formed between the metering edge (35) of the metering slide (19) and the opening edge (23) of the metering opening (18), said two openings being substantially consecutive in the direction of rotation of the distributor disc (4) (Figs. 3 to 8).

4. Two-disc spreader according to Claim 3, **characterized in that**, at very small mass flows, three openings are formed (Figs. 3 and 4).

5. Two-disc spreader according to one of Claims 1 to 4, **characterized in that**, at larger mass flows, the metering slide (19) delimits only a single opening area of the metering opening (18).

6. Two-disc spreader according to one of Claims 1 to 5, **characterized in that** the opening edge of the metering opening (18) on the approach side of the throwing blade (5) runs substantially radially (25) up to an average mass flow and, for larger mass flows, runs outwards (23) in the direction of rotation.

7. Two-disc spreader according to Claim 6, **characterized in that** the opening edge subsequently runs substantially concentrically (27) with respect to the axis of rotation of the distributor disc (4) and finally runs inwards in a steep curve (28) on the discharge side of the throwing blade (5).

8. Two-disc spreader according to one of Claims 1 to 7, **characterized in that** the opening edge (23) of the metering opening (18) has an asymmetric wave shape (30, 32) in the region in the vicinity of the centre (24) of the distributor disc (4).

9. Two-disc spreader according to one of Claims 1 to 7, **characterized in that** the centre of gravity of the metering surface migrates from the inside outwards counter to the direction of rotation (21, 22) of the distributor disc (4) from small to larger mass flows (Fig. 13).

10. Two-disc spreader according to one of Claims 1 to 9, **characterized in that** the maximum metering surface is at least 70 cm².

11. Two-disc spreader according to one of Claims 1 to 10, **characterized in that** the metering edge (35) of the metering slide (19) has at least one nose (38).

12. Two-disc spreader according to one of Claims 1 to 11, **characterized in that** the nose (38) on the metering edge (35) of the metering slide (19) interacts with the deepest wave trough (30) of the asymmetric wave shape of the opening edge (23) of the metering opening (18).

13. Two-disc spreader according to one of Claims 1 to 12, **characterized in that** the metering slide (19) is mounted pivotably.

14. Two-disc spreader according to one of Claims 1 to 13, **characterized in that** the metering device consists of a plate with the metering opening (18) and the metering slide (19) and is arranged with a large discharge opening (17) under the planar horizontal base (3) of the storage container (9) and is rotatable and fixable with respect to the distributor disc (4) for setting to different granular materials.

15. Two-disc spreader according to one of Claims 1 to 14 with an agitator (8) which revolves above each base (3) in the storage container (9) and has substantially radial agitator fingers, **characterized in that** the agitator fingers brush over the metering opening (18) substantially only in the region of the asymmetric wave shape (30, 32) of the opening edge (23).

16. Two-disc spreader according to one of Claims 1 to 15, **characterized in that**, with respect to the connecting line of the agitator axes, at least 60% of the area of the discharge opening (17) lies behind said connecting line, as seen in the direction of travel (20) of the two-disc spreader.

## Revendications

1. Distributeur centrifuge à deux disques pour des matériaux dispersibles doté d'un réservoir (1) comportant deux entonnoirs se rétrécissant en direction d'un fond (3) respectif, ainsi que respectivement d'un dispositif de dosage associé à chaque fond pourvu d'une ouverture de dosage (18) et d'un piston de dosage (19) permettant de régler le débit massique souhaité (quantité dispersée) et respectivement d'un disque répartiteur (4) tournant dessous et pourvu de pales éjectrices (5) tournant de l'intérieur vers l'extérieur à l'encontre de la direction d'avancée (20) du distributeur (21, 22) et produisant des éventails de dispersion ne se chevauchant pas totalement, de sorte que les éventails de dispersion d'un disque répartiteur (4) n'atteignent pas plus de la moitié de la largeur de travail de l'autre côté, une ouverture de dosage (18) étant associée à chaque fond (3), dont l'arête d'ouverture (23) est en liaison avec l'arête de dosage (35) du piston de dosage (19) de telle sorte que l'angle de dispersion α du matériau dispersé sur le disque répartiteur (4) à faible débit massique, avec une surface d'ouverture pouvant atteindre environ 2 % de l'ouverture de dosage (18), est de 70° ≤ α ≤ 90° et que lors de l'ouverture par paliers du piston de dosage (19) vers des débits massiques plus importants, jusqu'à une surface d'ouverture d'environ 90 % de l'ouverture de dosage (18), l'angle de dispersion αₙ relatif de la dernière surface partielle comprise entre 85 % et 90 % de la surface d'ouverture est réduit d'au moins 25° par rapport à la première surface partielle.

2. Distributeur centrifuge à deux disques selon la revendication 1, **caractérisé en ce que** lors de l'ouverture du piston de dosage (19) de 85 % à 90 % de la surface de dosage libre (débits massiques importants), l'angle de dispersion relatif est de 35° ≤ αₙ ≤ 50°.

3. Distributeur centrifuge à deux disques selon la revendication 1 ou 2, **caractérisé en ce qu'**à des débits massiques faibles, au moins deux ouvertures sont formées entre l'arête de dosage (35) du piston de dosage (19) et l'arête d'ouverture (23) de l'ouverture de dosage (18), lesdites ouvertures reposant pour l'essentiel l'une derrière l'autre dans la direction de rotation du disque répartiteur (4) (figures 3 à 8).

4. Distributeur centrifuge à deux disques selon la revendication 3, **caractérisé en ce qu'**à des débits massiques très faibles, trois ouvertures sont formées (figures 3 et 4).

5. Distributeur centrifuge à deux disques selon l'une quelconque des revendications 1 à 4, **caractérisé en ce qu'**à des débits massiques plus importants, le piston de dosage (19) ne délimite qu'une seule surface d'ouverture de l'ouverture de dosage (18).

6. Distributeur centrifuge à deux disques selon l'une quelconque des revendications 1 à 5, **caractérisé en ce que** l'arête d'ouverture de l'ouverture de dosage (18) s'étend, au niveau du côté de lancement de la pale éjectrice (5), pour l'essentiel dans le plan radial (25) jusqu'à un débit massique médian et vers l'extérieur (23) dans la direction de rotation jusqu'à des débits massiques plus importants.

7. Distributeur centrifuge à deux disques selon la revendication 6, **caractérisé en ce que** l'arête d'ouverture s'étend ensuite pour l'essentiel concentriquement (27) par rapport à l'axe de rotation du disque répartiteur (4) puis vers l'intérieur au niveau du côté de lancement de la pale éjectrice (5), selon une courbe raide (28).

8. Distributeur centrifuge à deux disques selon l'une quelconque des revendications 1 à 7, **caractérisé en ce que** l'arête d'ouverture (23) de l'ouverture de dosage (18) présente dans la région située à proximité du centre (24) du disque répartiteur (4) une forme d'onde asymétrique (30, 32).

9. Distributeur centrifuge à deux disques selon l'une quelconque des revendications 1 à 7, **caractérisé en ce que** le centre de gravité de la surface de dosage utilisée pour des débits massiques réduits à plus importants migre de l'intérieur vers l'extérieur, dans le sens contraire de la direction de rotation (21, 22) du disque répartiteur (4) (figure 13).

10. Distributeur centrifuge à deux disques selon l'une quelconque des revendications 1 à 9, **caractérisé en ce que** la surface de dosage maximale est au moins de 70 cm².

11. Distributeur centrifuge à deux disques selon l'une quelconque des revendications 1 à 10, **caractérisé en ce que** l'arête de dosage (35) du piston de dosage (19) comporte au moins un bec (38).

12. Distributeur centrifuge à deux disques selon l'une quelconque des revendications 1 à 11, **caractérisé en ce que** le bec (38) positionné au niveau de l'arête de dosage (35) du piston de dosage (19) interagit avec le creux d'onde (30) le plus profond de la forme d'onde asymétrique de l'arête d'ouverture (23) de l'ouverture de dosage (18).

13. Distributeur centrifuge à deux disques selon l'une quelconque des revendications 1 à 12, **caractérisé en ce que** le piston de dosage (19) est disposé de façon à pouvoir pivoter.

14. Distributeur centrifuge à deux disques selon l'une quelconque des revendications 1 à 13, **caractérisé en ce que** le dispositif de dosage se compose d'une plaque dotée d'une ouverture de dosage (18) et du piston de dosage (19) ainsi que d'une grande ouverture d'éjection (17) disposée sous le fond (3) horizontal plat du réservoir (9), et pouvant être tournée et fixée par rapport au disque répartiteur (4) de façon à régler la dispersion en fonction des différents matériaux dispersibles.

15. Distributeur centrifuge à deux disques selon l'une quelconque des revendications 1 à 19, avec respectivement un agitateur (8) tournant au-dessus du fond (3) dans le réservoir (9) doté de doigts d'agitateur pour l'essentiel radiaux, **caractérisé en ce que** les doigts d'agitateur ne surplombent l'ouverture de dosage (18) pour l'essentiel que dans la région de la forme d'onde (30, 32) asymétrique de l'arête d'ouverture (23).

16. Distributeur centrifuge à deux disques selon l'une quelconque des revendications 1 à 15, **caractérisé en ce qu'**au moins 60 % de la surface de l'ouverture d'éjection (17), vue dans la direction d'avancée (20) du distributeur centrifuge à deux disques, se place derrière la ligne de jonction des axes d'agitateur par rapport à ladite ligne de jonction.
